(19) **Europäisches Patentamt**
**European Patent Office**
**Office européen des brevets**

(11) **EP 1 774 216 B1**

(12) **FASCICULE DE BREVET EUROPEEN**

(45) Date de publication et mention
de la délivrance du brevet:
**02.05.2012 Bulletin 2012/18**

(51) Int Cl.:
***F16L 11/08*** *(2006.01)*

(21) Numéro de dépôt: **05791981.3**

(86) Numéro de dépôt international:
**PCT/FR2005/050578**

(22) Date de dépôt: **13.07.2005**

(87) Numéro de publication internationale:
**WO 2006/016089 (16.02.2006 Gazette 2006/07)**

(54) **PROCEDE DE FABRICATION DE TUBES COMPOSITES PAR PULTRUSION ET TUBES OBTENUS**

VERFAHREN ZUR HERSTELLUNG VON VERBUNDROHREN DURCH PULTRUSION UND DAMIT
HERGESTELLTE ROHRE

METHOD FOR MAKING COMPOSITE TUBES BY PULTRUSION AND RESULTING TUBES

(84) Etats contractants désignés:
**AT BE BG CH CY CZ DE DK EE ES FI FR GB GR
HU IE IS IT LI LT LU LV MC NL PL PT RO SE SI
SK TR**

(30) Priorité: **15.07.2004 FR 0451533**

(43) Date de publication de la demande:
**18.04.2007 Bulletin 2007/16**

(73) Titulaire: **Epsilon Composite
33340 Gaillan (FR)**

(72) Inventeur: **PORTOLES, José
F-33340 QUEYRAC (FR)**

(74) Mandataire: **Fantin, Laurent
Aquinov
Allée de la Forestière
33750 Beychac et Caillau (FR)**

(56) Documents cités:
**EP-A2- 0 169 046     JP-A- 8 205 649
US-A- 4 202 718     US-A- 4 343 333
US-A- 5 702 109**

**Description**

La présente invention concerne un procédé de fabrication de tubes composites par pultrusion.

L'invention couvre aussi le produit obtenu par la mise en oeuvre du procédé selon l'invention.

On connaît de nombreuses applications de tubes réalisés en matériau composite.

On entend par matériau composite pour la suite de la description des fibres de façon préférentielle en carbone et de la résine choisie particulièrement mais de façon non limitative dans la famille des époxy ou des résines thermodurcissables. Le terme "tube" utilisé dans la présente demande de brevet s'entend de tout type de tube quelle que soit sa section, circulaire ou ovale.

Une application toute particulière de tubes à très hautes performances est celle des rouleaux fonctionnels ou de guidage.

Les performances recherchées sont généralement concentrées sur une rectitude et/ou une précision de faux rond avec de très faibles tolérances, de l'ordre du dixième de millimètre pour les produits, ceci directement en sortie de fabrication.

Il convient aussi de permettre une rectification de ces mêmes tubes déjà très précis si nécessaire pour obtenir des précisions encore plus grandes.

L'avantage de la légèreté que procure l'usage de tels matériaux est connu mais appliqué à des pièces susceptibles de subir de très fortes accélérations et de très fortes décélérations, l'intérêt s'en trouve encore plus accru.

Dans des applications de guidage, par exemple dans des machines de travail de bandes de matière textile ou de matière plastique, ce problème est crucial.

De même, la rigidité c'est-à-dire la résistance à la déformation mais aussi la résistance à la flexion pour les tubes à section circulaire sont des paramètres importants qu'il convient d'améliorer.

Le but de la présente invention est de proposer un procédé de fabrication de tubes qui répondent à ces contraintes techniques mais aussi un procédé qui conduit à des prix de revient qui permettent une substitution pour certaines applications à d'autres types de rouleaux et pour certaines autres applications à des performances accrues, impossibles à atteindre avec d'autres matériaux.

La fabrication par le procédé selon l'invention permet aussi la réalisation d'une longueur de tube infinie donc apte à être tronçonnée à la demande, ce qui autorise aussi une grande souplesse dans la gestion des produits et des demandes des clients et des utilisateurs.

Pour la fabrication de tubes aptes à répondre partiellement aux contraintes imposées, l'art antérieur utilise pour arriver à des prix compétitifs le procédé dit d'enroulement filamentaire.

Ce procédé oblige à un enroulement donc à travailler uniquement avec des angles d'enroulement importants, limitant par la même les performances et la valeur de certains paramètres.

On sait aussi qu'un problème soulevé par les procédés de l'art antérieur réside dans le retrait de la résine lors de la polymérisation qui provoque des déformations géométriques, ceci notamment lorsque les angles d'enroulement sont importants.

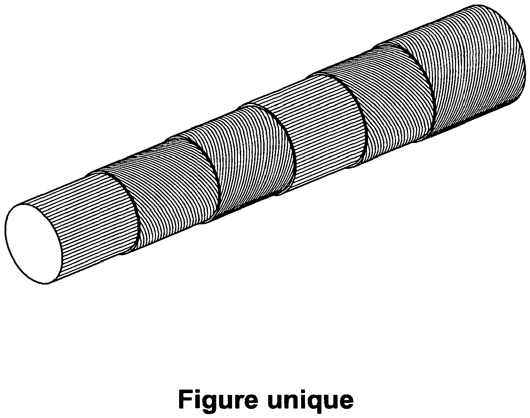

Le procédé selon l'invention est maintenant décrit en regard du dessin comportant une figure unique d'un tube obtenu par ce procédé, dans son meilleur mode de réalisation, avec un arrachement partiel faisant apparaître les différentes couches.

On recourt à la pultrusion pour la mise en oeuvre des étapes du procédé. La pultrusion consiste à réaliser des tubes par passage à travers une tête de guidage et de dépose de fils issus de bobines, les fils étant pré imprégnés de résine ou imprégnés au passage.

Les déposes de fils sont effectuées suivant les différentes nappes prévues et ceci avec les orientations déterminées préalablement.

Le tube est uniquement soumis à une translation, sans rotation, seule la tête de dépose étant en rotation et fixe en translation.

Le tube ainsi réalisé est soumis à un passage à travers une tête de chauffage pour assurer la polymérisation de ladite résine.

Le tube ainsi formé est tiré en sortie par des galets moteurs, en translation, dans l'axe du tube.

La fabrication est ainsi réalisée en continu avec des longueurs infinies, limitées par la place disponible et par les longueurs de tubes recherchées. A cet effet, une unité de découpe liée en translation aux déplacements du tube assure le tronçonnage des sections en fonction des besoins.

Le diamètre du tube est constant pour un ensemble donné de têtes.

Le procédé selon l'invention consiste à prévoir la constitution d'un tube par superposition de la succession minimale de couches de fils, en l'occurrence de fils de carbone, mais des fibres ou fils de verre ou de nature équivalente pourraient convenir :

- <u>couche 1</u> dite d'entraînement comportant une nappe de fils unidirectionnels ou un tissu supportant les efforts de traction. Les fils en unidirectionnel ont une orientation faisant un angle de 0° avec l'axe longitudinal du tube. Les fils sont confondus avec des génératrices de ce tube. Cette nappe permet de tracter l'ensemble du tube qui va être réalisé. Cette couche doit avoir pour paramètre important une faible épaisseur.

- <u>couche 2</u> comportant des fils déposés avec un angle par rapport à l'axe longitudinal du tube compris entre + 5 et + 60° ou - 5° et - 60°. Le symbole + ou - figure le fait que la dépose peut être effectuée d'un côté ou de l'autre par rapport au plan transversal du tube. On note que plus l'angle est faible et plus il faut augmenter le nombre de fils pour couvrir la surface. En effet la section apparente du fil suivant une section transversale du tube se rapproche de la largeur du fil. En effet, les fils déposés ont une section sensiblement rectangulaire de largeur $l$ et d'épaisseur $e$. Soit $\alpha$ l'angle d'inclinaison, $D$ le diamètre du tube et $n$ le nombre de fils, on constate que le nombre de fils est proportionnel à l'angle d'enroulement pour un diamètre donné selon la formule :

$$n = (\cos\alpha \times \pi D) / l$$

toutefois, un nombre de fils inférieur peut être utilisé dans le cas de couches non jointives.

- couche 3 unidirectionnelle avec un angle de 0°. Cette couche peut aussi comprendre d'autres renforts, non tissés, ruban, etc...

L'ensemble est polymérisé en température de façon connue, en fonction du type de résine utilisée.

Cet agencement constitue le mode de réalisation minimal à trois couches, peu performant.

Dans un souci de symétrie et d'équilibre du produit fabriqué et afin d'optimiser ses caractéristiques mécaniques, le procédé prévoit la réalisation d'une succession de couches comportant une couche supplémentaire 2bis dont l'angle d'inclinaison est symétrique de celui de la couche 2. Ainsi pour un angle choisi de + 60 ° pour la couche 2, on choisit un angle de - 60 ° pour la couche 2bis.

On obtient ainsi un tube avec une succession suivante de couches :

- couche 1 : unidirectionnel 0 °
- couche 2 : dépose de $n$ fils avec un angle compris entre ± 5 et ± 60 °
- couche 2bis : dépose de $n$ fils avec un angle compris entre ± 5 et ± 60 °, les couches 2 et 2bis étant nécessairement avec des angles de signes opposés. Si, par exemple, la couche 2 est - 5° et - 60°, la couche 2bis est nécessairement + 5° et + 60°.
- couche 3 : unidirectionnel 0°.

L' ensemble est polymérisé.

Afin d'optimiser encore le mode de réalisation, le procédé selon l'invention prévoit une succession complexe de couches avec un doublement des couches intermédiaires, ce qui conduit à un tube extrêmement performant.

Dans ce mode de réalisation sophistiqué, le procédé prévoit la succession suivante de couches :

- couche 1 : unidirectionnel 0°
- couche 2 : dépose de $n$ fils avec un angle compris entre ± 5 et ± 60 °
- couche 2bis : dépose de $n$ fils avec un angle compris entre ± 5 et ± 60 °, les couches 2 et 2bis étant nécessairement avec des angles de signes opposés

- couche 3 : unidirectionnel 0°,
- couche 4 : dépose de $n$ fils avec un angle compris entre ± 5 et ± 60 °
- couche 4bis : dépose de $n$ fils avec un angle compris entre ± 5 et ± 60 °, les couches 4 et 4bis étant nécessairement avec des angles de signes opposés.

L'ensemble est ensuite polymérisé. C'est ce mode de réalisation qui est schématiquement représenté dans l'ordre exact des couches, couche 1 au centre et 4bis à l'extérieur.

De façon préférentielle, afin d'assurer une rigidité adaptée à des performances élevées dans le cas d'un enroulement à base de fils de carbone, il est prévu de constituer la couche 3 de chaque mode de réalisation avec des fils de carbone comportant au moins 50% de carbone.

De même et ceci de façon connue, il est possible de disposer des voiles de fibres en surface extérieure en sorte de conférer au tube fini et obtenu par la mise en oeuvre du procédé, un état de surface adapté, notamment susceptible de supporter une rectification finale. Tout autre revêtement final peut être envisagé en fonction des applications, y compris une couche ultime de fils unidirectionnels à 0°.

Les tubes ainsi obtenus en sortie de fabrication, ont une rectitude inférieure à 0,05 mm/mètre.

L'équilibre des couches ainsi que la réalisation d'une structure sandwich avec une couche unidirectionnelle médiane dans le troisième mode de réalisation, riche en carbone, confère des propriétés particulièrement élevé au tube obtenu.

Le mode de réalisation trouve une application particulière lorsqu'il met en oeuvre le procédé avec des fibres de carbone de très haut module, ce qui est possible avec le procédé de pultrusion.

Dans ce cas, on peut citer des fils dits pitch c'est-à-dire des fils avec une forte base de braie connus sous la référence dénomination commerciale DIALEAD de la société Mitsubishi Chemical.

Les tubes réalisés avec la mise en oeuvre du procédé conduisent à des modules de valeurs supérieures de 20 à 40 % à celles des valeurs obtenues par enroulement filamentaire.

Avec la solution performante à couches 2, 2bis et 4, 4bis, on obtient des résultats très distinctifs de ceux de l'art antérieur. On atteint ainsi des valeurs de module E de flexion d'au moins 300 GPa comparés aux 200 à 250 GPa généralement obtenus par enroulement filamentaire.

Les applications dans les métiers de l'impression par exemple sont nombreuses car cette industrie recherche des tubes ou des manchons à très hautes performances, les vitesses de travail augmentant pour atteindre des vitesses de 600m/min en flexographie.

Pour parfaire et déterminer les angles optimisés, il convient de noter les considérations suivantes :

- lorsqu'un tube est court, il est plus sujet aux problèmes d'écrasement qu'aux problèmes de flexion. Dans ce cas, il convient d'augmenter l'angle d'inclinaison des fils.
- lorsqu'un tube est long, il est plus sensible à la flexion. Dans ce cas, il convient de réduire l'angle pour augmenter la raideur.

Dans les proportions, le mode de réalisation préférentiel nécessite une couche de traction qui comprend 20% du total des fils, les couches intermédiaires, couches 2 et 2bis, couches 4 et 4bis, 30% du total des fils et la couche 3 unidirectionnelle 50%.

Les couches ainsi constituées peuvent être répétées en superposition, mais il convient de tenir compte des coûts qui risquent de devenir rédhibitoires.

**Revendications**

1. Procédé de fabrication d'un tube pour rouleaux fonctionnels ou de guidage en matériau composite en pultrusion par superposition de couches de fils pré imprégnés de résine ou à imprégnation directe de résine, **caractérisé en ce qu'**il consiste en la succession des étapes suivantes :

  - dépose par pultrusion d'une couche 1 d'entraînement comportant une nappe de fils unidirectionnels 0° ou un tissu supportant les efforts de traction,
  - dépose par pultrusion, sur la première couche 1, d'une couche 2 comportant $\underline{n}$ fils disposés avec un angle par rapport à l'axe longitudinal du tube compris entre + 5 et + 60° ou - 5° ou - 60°
  - dépose par pultrusion, sur la couche 2, d'une couche 2bis comportant $\underline{n}$ fils disposés avec un angle par rapport à l'axe longitudinal du tube compris entre - 5 et - 60° ou + 5° ou + 60°, et les couches 2 et 2bis étant nécessairement avec des angles de signes opposés,
  - dépose par pultrusion, sur la couche 2bis, d'une couche 3 unidirectionnelle avec un angle de 0°, et
  - l'ensemble est ensuite polymérisé.

2. Procédé de fabrication d'un tube en matériau composite selon la revendication 1, **caractérisé en ce qu'**il comprend une succession complexe de couches avec un doublement des couches intermédiaires, avec la succession suivante de couches :

  - couche 1 : dépose par pultrusion d'une couche unidirectionnelle à 0°,
  - couche 2 : dépose par pultrusion de $\underline{n}$ fils avec un angle compris entre $\pm$ 5 et $\pm$ 60°
  - couche 2bis : dépose par pultrusion de $\underline{n}$ fils avec un angle compris entre

$\pm$ 5 et $\pm$ 60 °, les couches 2 et 2bis étant nécessairement avec des angles de signes opposés
  - couche 3 : dépose par pultrusion d'une couche unidirectionnelle à 0°,
  - couche 4 : dépose par pultrusion de $\underline{n}$ fils avec un angle compris entre $\pm$ 5 et $\pm$ 60 °
  - couche 4bis : dépose par pultrusion de $\underline{n}$ fils avec un angle compris entre $\pm$ 5 et $\pm$ 60 °, les couches 4 et 4bis étant nécessairement avec des angles de signes opposés,
  - l'ensemble est ensuite polymérisé.

3. Procédé de fabrication d'un tube en matériau composite selon l'une quelconque des revendications 1 ou 2, **caractérisé en ce qu'**il comprend une étape supplémentaire de dépose sur la dernière couche, d'une couche ultime de finition.

4. Procédé de fabrication d'une tube en matériau composite selon la revendication 3, **caractérisé en ce que** l'on dépose comme couche ultime de finition, une couche de fils unidirectionnels.

5. Procédé de fabrication d'une tube en matériau composite selon la revendication 3, **caractérisé en ce que** l'on dépose comme couche ultime de finition, un voile.

6. Tube en matériau composite obtenu par la mise en oeuvre du procédé selon l'une quelconque des revendications 1 à 5, **caractérisé en ce que** les fils sont des fils de carbone.

7. Tube en matériau composite, selon la revendication 6, **caractérisé en ce qu'**il présente un module E de flexion d'au moins 300 GPa.

8. Tube en matériau composite selon la revendication 6 ou 7, **caractérisé en ce que** la couche 3 de fils unidirectionnels comprend au moins 50% de carbone.

9. Tube en matériau composite selon la revendication 6, 7 ou 8, **caractérisé en ce que** la répartition des couches est réalisée dans les proportions suivantes :

  - la couche 1 de traction comprend 20% du total des fils,
  - les couches intermédiaires, dénommées les couches 2, 2bis, les couches 4, 4bis, comprennent 30% du total des fils, et
  - la couche 3 unidirectionnelle comprend 50% du total des fils.

**Claims**

**1.** A method of manufacturing a tube for functional or guide rollers made from composite material using pultrusion by the superimposition of layers of fibres pre-impregnated with resin or by direct impregnation with resin, **characterised in that** it comprises the following succession of steps:

- deposition by pultrusion of a driving layer 1 comprising a ply of 0° unidirectional fibres or a fabric supporting the traction forces,
- deposition by pultrusion, on the first layer 1, of a layer 2 comprising n fibres disposed with an angle with respect to the longitudinal axis of the tube of between +5° and +60° or -5° or -60°,
- deposition by pultrusion, on the layer 2, of a layer 2bis comprising n fibres disposed with an angle with respect to the longitudinal axis of the tube of between -5° and -60° or +5° or +60°, and the layers 2 and 2bis necessarily being with angles of opposite signs,
- deposition by pultrusion, on the layer 2bis, of a unidirectional layer 3 with an angle of 0°, and
- the whole is then polymerised.

**2.** A method of manufacturing a tube made from composite material according to claim 1, **characterised in that** it comprises a complex succession of layers with a duplication of the intermediate layers, with the following succession of layers:

- layer 1: deposition by pultrusion of a unidirectional layer at 0°,
- layer 2: deposition by pultrusion of n fibres with an angle of between 15° and ±60°,
- layer 2bis: deposition by pultrusion of n fibres with an angle of between ±5° and ±60°, the layers 2 and 2bis necessarily being with angles with opposite signs,
- layer 3: deposition by pultrusion of a unidirectional layer at 0°,
- layer 4: deposition by pultrusion of n fibres with an angle of between ±5° and ±60°,
- layer 4bis: deposition by pultrusion of n fibres with an angle of between ±5° and ±60°, the layers 4 and 4bis necessarily being with angles with opposite signs,
- the whole is then polymerised.

**3.** A method of manufacturing a tube made from composite material according to either one of claims 1 or 2, **characterised in that** it comprises an additional step of deposition, on the last layer, of a final finishing layer.

**4.** A method of manufacturing a tube made from composite material according to claim 3, **characterised in that**, as the final finishing layer, a layer of unidirectional fibres is deposited.

**5.** A method of manufacturing a tube made from composite material according to claim 3, **characterised in that** a voile is deposited as the final finishing layer.

**6.** A tube made from composite material obtained by implementing the method according to any one of claims 1 to 5, **characterised in that** the fibres are carbon fibres.

**7.** A tube made from composite material according to claim 6, **characterised in that** it has a bending modulus E of at least 300 GPa.

**8.** A tube made from composite material according to claim 6 or 7, **characterised in that** the layer 3 of unidirectional fibres comprises at least 50% carbon.

**9.** A tube made from composite material according to claim 6, 7 or 8, **characterised in that** the layers are distributed in the following proportions:

- the traction layer 1 comprises 20% of the total fibres,
- the intermediate layers, named layers 2, 2bis and the layers 4, 4bis, comprise 30% of the total fibres, and
- the unidirectional layer 3 comprises 50% of the total fibres.

**Patentansprüche**

**1.** Verfahren zur Herstellung eines Rohres für Funktionsrollen oder Führungsrollen aus einem Verbundmaterial durch Pultrusion durch Überlagerung von Schichten aus mit Harz vorimprägnierten Fasern oder aus Fasern mit unmittelbarer Harzimprägnation, **dadurch gekennzeichnet, dass** das Verfahren aus der Abfolge der folgenden Verfahrensschritte besteht:

- Ablage durch Pultrusion einer Antriebsschicht 1, die ein Tuch mit unidirektionalen 0°-Fasern aufweist oder ein Gewebe, das der Zugbeanspruchung standhält,
- auf der ersten Schicht 1 Ablage durch Pultrusion einer Schicht 2, die n Fasern aufweist, die bezüglich der Längsachse des Rohres in einem Winkel zwischen +5° und +60° oder -5° oder -60° ausgerichtet sind,
- auf der Schicht 2 Ablage durch Pultrusion einer Schicht 2bis, die n Fasern aufweist, die bezüglich der Längsachse des Rohres in einem Winkel zwischen -5° und -60° oder +5° oder +60° ausgerichtet sind, und wobei die Schichten 2 und 2bis notwendigerweise Winkel mit entgegengesetzten Vorzeichen aufweisen,
- auf der Schicht 2bis Ablage durch Pultrusion einer unidirektionalen Schicht 3 mit einem Winkel von 0°, und
- das Ganze wird anschließend polymerisiert.

2. Verfahren zur Herstellung eines Rohres aus Verbundmaterial gemäß Anspruch 1, **dadurch gekennzeichnet, dass** es eine komplexe Folge von Schichten mit einer Verdopplung der Zwischenschichten mit der folgenden Schichtfolge aufweist:

    - Schicht 1: Ablage durch Pultrusion einer unidirektionalen Schicht bei 0°,
    - Schicht 2: Ablage durch Pultrusion von n Fasern mit einem Winkel zwischen +/-5° und +/-60°,
    - Schicht 2bis: Ablage durch Pultrusion von n Fasern mit einem Winkel zwischen +/-5° und +/-60°, wobei die Schichten 2 und 2bis notwendigerweise Winkel mit entgegengesetzten Vorzeichen aufweisen,
    - Schicht 3: Ablage durch Pultrusion einer unidirektionalen Schicht bei 0°,
    - Schicht 4: Ablage durch Pultrusion von n Fasern mit einem Winkel zwischen +/-5° und +/-60°,
    - Schicht 4bis: Ablage durch Pultrusion von n Fasern mit einem Winkel zwischen +/-5° und +/-60°, wobei die Schichten 4 und 4bis notwendigerweise Winkel mit entgegengesetzten Vorzeichen aufweisen,
    - das Ganze wird anschließend polymerisiert,

3. Verfahren zur Herstellung eines Rohres aus Verbundmaterial gemäß einem der Ansprüche 1 oder 2, **dadurch gekennzeichnet, dass** das Verfahren einen ergänzenden Verfahrensschritt einer Ablage einer äußersten Abschlussschicht auf der letzten Schicht umfasst.

4. Verfahren zur Herstellung eines Rohres aus Verbundmaterial gemäß Anspruch 3, **dadurch gekennzeichnet, dass** eine Schicht mit unidirektionalen Fasern als äußerste Abschlussschicht abgelegt wird.

5. Verfahren zur Herstellung eines Rohres aus Verbundmaterial gemäß Anspruch 3, **dadurch gekennzeichnet, dass** als äußerste Abschlussschicht eine Umhüllung abgelegt wird.

6. Rohr aus Verbundmaterial, das durch die Anwendung des Verfahrens nach einem der Ansprüche 1 bis 5 erhalten worden ist, **dadurch gekennzeichnet, dass** die Fasern OKohlenstofffasern sind.

7. Rohr aus Verbundmaterial gemäß Anspruch 6, **da-** **durch gekennzeichnet, dass** es ein Biegemodul E von wenigstens 300 GPa aufweist.

8. Rohr aus Verbundmaterial nach Anspruch 6 oder 7, **dadurch gekennzeichnet, dass** die Schicht 3 aus unidirektionalen Fasern wenigstens 50% Kohlenstoff aufweist.

9. Rohr aus Verbundmaterial nach Anspruch 6, 7 oder 8, **dadurch gekennzeichnet, dass** die Verteilung der Schichten gemäß folgenden Verhältnissen erfolgt:

    - die Zugschicht 1 umfasst 20% der gesamten Fasern,
    - die als Schichten 2, 2bis, 4, 4bis bezeichneten Zwischenschichten umfassen 30% der gesamten Fasern, und
    - die unidirektionale Schicht 3 umfasst 50% der gesamten Fasern.

**Figure unique**